# EUROPEAN PATENT APPLICATION

(11) **EP 1 816 722 A2**
(43) Date of publication of application: **08.08.2007**
(21) Application number: 06023848.2
(22) Date of filing: 16.11.2006
(51) Int. Cl.: H02J 7/00

(54) **Charging method, charging circuit, and charging device**

(30) Priority: 17.11.2005 JP 2005333105
(71) Applicant: MATSUSHITA ELECTRIC WORKS, LTD., Kadoma-shi, Osaka 571-8686 (JP)
(72) Inventor: Ohashi, Toshiharu, c/o Matsushita El. Works, Ltd., Osaka 571-8686 (JP); Sakaue, Masaaki, c/o Matsushita El. Workds, Ltd., Osaka 571-8686 (JP); Ito, Masatoshi, Setagaya-ku, Tokyo (JP)
(74) Representative: Müller-Boré & Partner Patentanwälte

(57) **Abstract**

When charging of a secondary battery is started, a power source section for supplying an electric current for charging the secondary battery gradually increases the supply amount of the current. If the charging current has reached a predetermined first threshold current, the power source section is operative to set the supply amount of the current to a predetermined constant current for a constant current charging. If a terminal voltage of the secondary battery has reached a predetermined threshold voltage, the power source section is operative to supply a predetermined voltage for a constant voltage charging to the secondary battery.

## Description

### BACKGROUND OF THE INVENTION

### 1. Field of the Invention

The present invention relates to a charging method, a charging circuit, and a charging device of a secondary battery.

### 2. Description of the Related Art

In recent years, there have been widely used various secondary batteries such as lithium ion secondary batteries and nickel hydride secondary batteries, as a drive source for electric equipment such as electric tools and mobile phones. Overcharging such a secondary battery may cause breakage of a battery pack or shorten the life of the secondary battery. In particular, an adverse effect by overcharging is serious in the lithium ion secondary batteries. Overcharge of the secondary battery can be prevented by slowly charging with a less charging current, and by suspending the charging when the voltage of the secondary battery has reached a predetermined value. The less flow of the charging current, however, may increase a charging time.

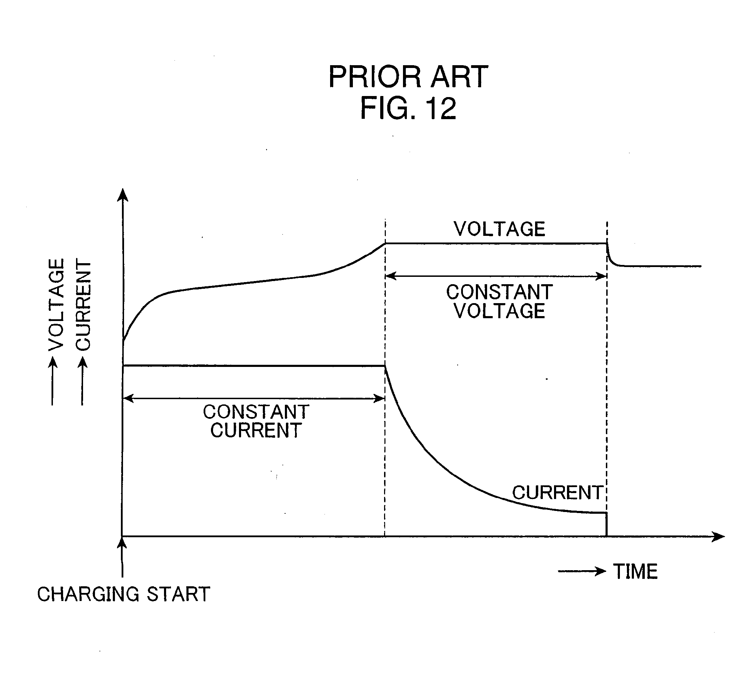

FIG. 12 is a diagram for describing a charging method according to the related art. Specifically, in FIG. 12, the axis of abscissas represents a time, and the axis of ordinate represents a current and a voltage. As shown in FIG. 12, the secondary battery is quickly charged with a constant current immediately after start of the charging by a constant current charging. Then, when the voltage of the secondary battery has reached a certain level, the charging operation is switched over to a constant voltage charging of applying a predetermined level of constant voltage to the secondary battery. As the charging of the secondary battery is carried out by the constant voltage charging, the charging current is decreased, and the charging is suspended when the charging current is lowered than a predetermined value. As mentioned above, there is known a charging circuit of preventing overcharge of a secondary battery (e.g. see Japanese Unexamined Patent Publication No. 10-66277/1998).

In the above-mentioned charging circuit of performing a constant current charging immediately after start of the charging, if charging of the secondary battery is started in a full charge condition or a near-full-charge condition, a constant current charging immediately after start of the charging may cause a charging current for quick charging, whose current value is set to a large value, to forcibly flow in the secondary battery in the full charge condition. As a result, overcharge may occur in the secondary battery incorporated with the aforementioned charging circuit. In particular, if a charging start operation is repeated by e.g. user's plugging a power plug of an electric device loaded with a secondary battery in and out of a socket, or user's attaching and detaching a battery pack to and from a charging device, each time the charging start operation is conducted, the secondary battery is charged by the constant current charging for quick charging, with its current value being set to a large value. This may cause overcharging of the secondary battery.

### SUMMARY OF THE INVENTION

In view of the above problems residing in the conventional examples, it is an object of the invention to provide a charging method and a charging circuit that enable to suppress overcharging which may occur in start of charging a secondary battery in a full charge condition or a near-full-charge condition. It is another object of the invention to provide a charging device provided with the charging circuit.

According to an aspect of the invention, when charging of a secondary battery is started, a power source section for supplying an electric current for charging the secondary battery gradually increases the supply amount of the current. If the charging current has reached a predetermined first threshold current, the power source section is operative to set the supply amount of the current to a predetermined constant current for a constant current charging. If a terminal voltage of the secondary battery has reached a predetermined threshold voltage, the power source section is operative to supply a predetermined voltage for a constant voltage charging to the secondary battery.

The above arrangement enables to reduce the charging current immediately after the charging start, and to suppress overcharging which may occur in start of charging the secondary battery in a full charge condition or a near-full-charge condition.

These and other objects, features and advantages of the present invention will become more apparent upon reading the following detailed description along with the accompanying drawing.

### BRIEF DESCRIPTION OF THE DRAWING

FIG. 1 is an external view showing a charging device incorporated with a charging circuit according to a first embodiment of the invention, and essential parts of a rechargeable electric tool kit equipped with the charging device.
FIG. 2 is an external view showing a state that a battery pack is loaded on a tool body of the electric tool kit shown in FIG. 1.
FIG. 3 is an external view showing a state that the battery pack is loaded on the charging device shown in FIG. 1.
FIG. 4 is a block diagram showing an example of an electric configuration of the charging circuit and the battery pack shown in FIG. 1 in a connected condition.
FIG. 5 is a diagram for describing an example of a charging operation in the case where the battery pack shown in FIG. 4 is coupled to the charging device.
FIG. 6 is a diagram for describing another example of a charging operation in the case where the battery pack shown in FIG. 4 is coupled to the charging device.
FIG. 7 is a diagram for describing an example of an operation of the charging device in the case where a secondary battery is in a near-full-charge condition.
FIG. 8 is a diagram for describing an example of an operation of the charging device in the case where the secondary battery is in a full charge condition.
FIG. 9 is a block diagram showing an example of an arrangement of a charging circuit according to a second embodiment of the invention.
FIG. 10 is a diagram for describing an operation of the charging circuit shown in FIG. 9.
FIG. 11 is a table showing an example of a lookup table in which initial voltages of a secondary battery and increase rates are correlated to each other.
FIG. 12 is a diagram showing a charging method according to the related art.

### DETAILED DESCRIPTION OF THE PREFERRED EMBODIMENTS

In the following, embodiments of the invention will be described referring to the drawings. Constituent elements with like reference numerals throughout the drawings are identical to each other in arrangement, and repeated description thereof will be omitted herein.

### (First Embodiment)

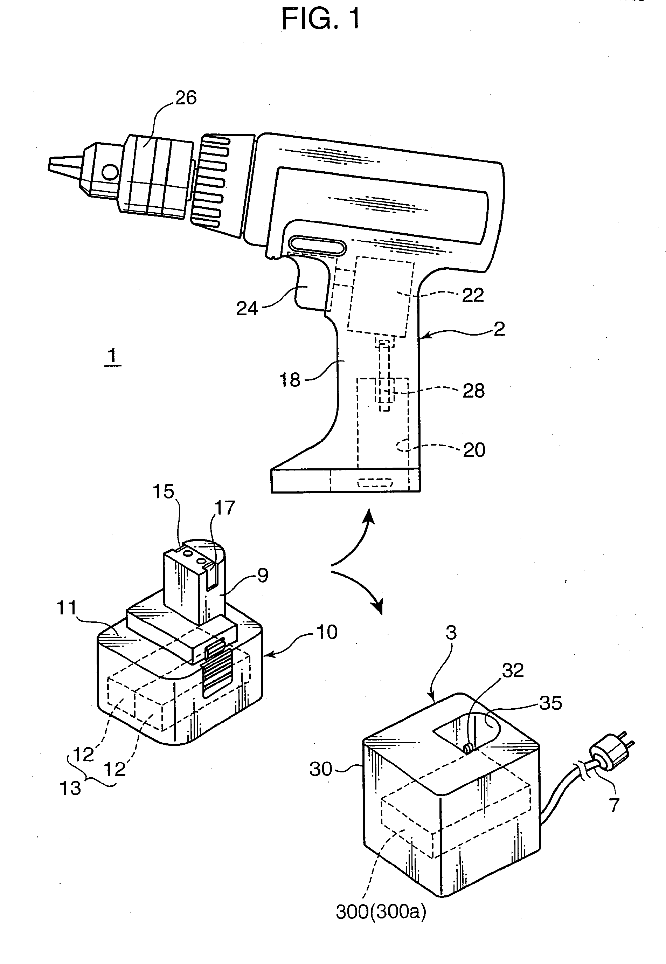

FIG. 1 is an external view showing a charging device incorporated with a charging circuit according to the first embodiment of the invention, and essential parts of a rechargeable electric tool kit equipped with the charging device. Referring to FIG. 1, the rechargeable electric tool kit 1 includes a tool body 2 comprising a rechargeable drill driver, a battery pack 10 to be loaded on the tool body 2, and a charging device 3 for charging the battery pack 10.

The tool body 2 includes: an attachment portion 20 which is formed inside a gripping portion of a casing 18, and is adapted to detachably attach the battery pack 20; a motor 22 which is arranged inside the casing 18, and is driven by supply of an electric current from the battery pack 10; a trigger switch 24 which is provided at an appropriate position on the gripping portion of the casing 18, and is adapted to control on/off of the current supply to the motor 22; and a rotating portion 26 which is formed at a distal end of the casing 18, and is adapted to attach a drill blade or a like member. A pair of electrode terminals 28 connected to the motor 22 are provided on a bottom portion of the attachment portion 20.

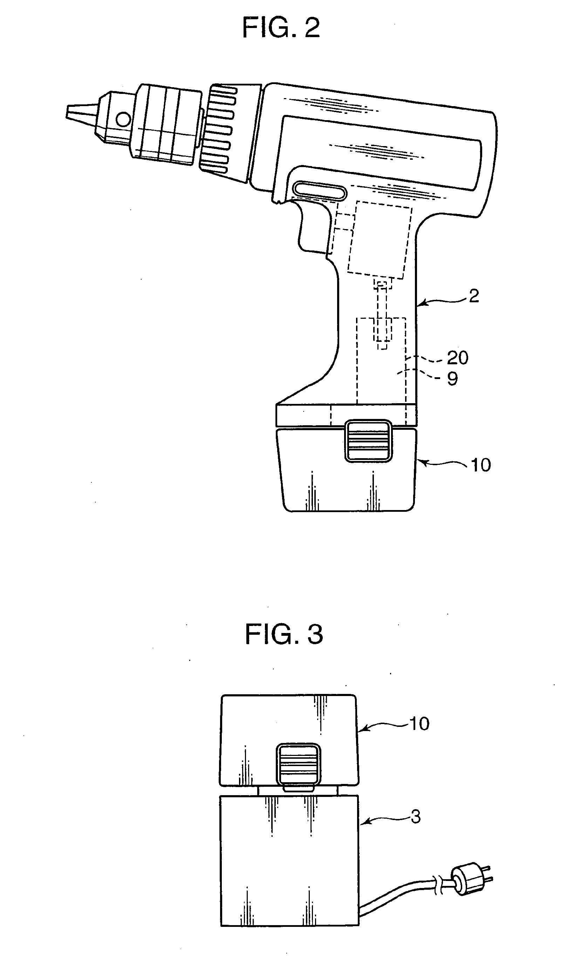

The battery pack 10 includes a casing 11 for housing a secondary battery unit 13 comprising secondary batteries connected in series, and a connector 9 which protrudes outwardly from one surface of the casing 11, and is adapted to be mounted in the attachment portion 20 of the tool body 2. Electrodes 15 and 17 are provided on an outer portion of the connector 9. The electrodes 15 and 17 are connected to the secondary battery unit 13. When the battery pack 10 is loaded on the attachment portion 20 of the tool body 2, the electrodes 15 and 17 are pressingly contacted against the electrode terminal pair 28. FIG. 2 shows a state that the battery pack 10 is loaded on the attachment portion 20 of the tool body 2.

The charging device 3 shown in FIG. 1 includes a substantially box-shaped casing 30, a power source line 7 to be connected to a commercial power source of e.g. AC 100V, and an attachment hollow portion 35 which is formed on an upper surface of the substantially box-shaped casing 30 with an upward opening for receiving the connector 9 of the battery pack 10 therein. A charging circuit 300 comprising a direct-current power source and a controlling section is provided inside the casing 30. Electrodes 31 and 32 (the electrode 31 is not shown), which serve as connector terminals, are provided on an inner wall of the attachment hollow portion 35. The electrodes 31 and 32 are electrically connected to the battery pack 10 by their contact with the electrodes 15 and 17 provided on the connector 9. When the battery pack 10 is loaded on the charging device 3, the electrodes 15 and 17 are pressingly contacted against the electrodes 31 and 32, whereby the charging circuit 300 and the battery pack 10 are connected to each other. The electrodes 17 and 32 function as positive charging electrodes, and the electrodes 15 and 31 function as negative charging electrodes i.e. are circuit-grounded. FIG. 3 shows a state that the battery pack 10 is mounted in the attachment hollow portion 35 of the charging device 3.

The above describes an example that the tool body 2, the charging device 3, and the battery pack 10 are provided as individual parts. Alternatively, the charging circuit 300 and the secondary battery unit 13 may be built in the tool body 2. Also, the battery pack 10 may be used for various electric equipment such as portable personal computer and mobile phones, in place of being used for the tool body 2.

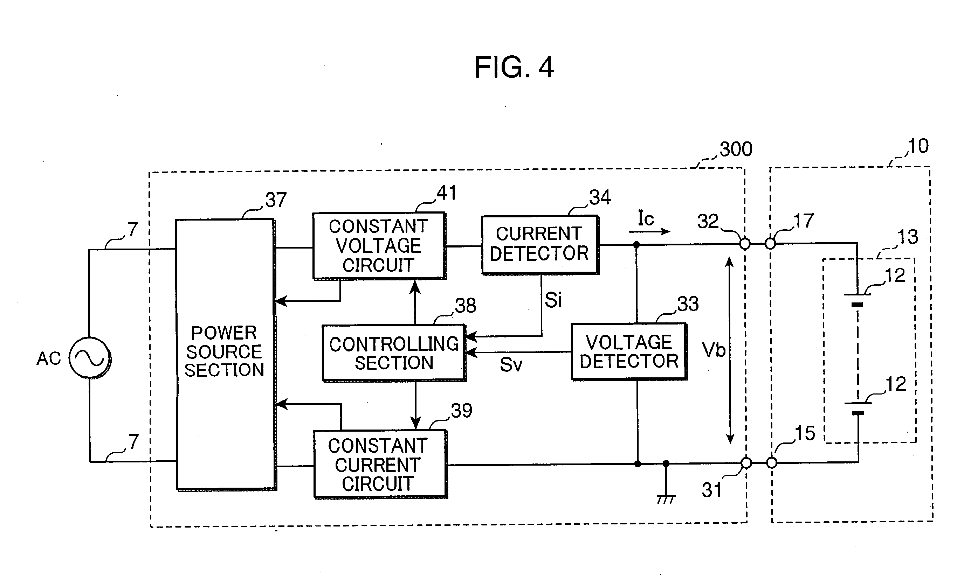

FIG. 4 is a block diagram showing an example of an electrical configuration of the charging circuit 300 and the battery pack 10 in a connected condition. The battery pack 10 shown in FIG. 4 has an arrangement that the positive terminal of the secondary battery unit 13 comprising the secondary batteries 12 connected in series is connected to the electrode 17, and that the negative terminal of the secondary battery unit 13 is connected to the electrode 15. The secondary battery unit 13 may comprise a single secondary battery 12, or comprise secondary batteries 12 connected in parallel to each other, in place of the series-connected secondary batteries 12. Further alternatively, the secondary battery unit 13 may be constructed by connecting series-connected secondary batteries in parallel in rows.

The secondary battery 12 is e.g. a lithium ion secondary battery. Alternatively, the secondary battery 12 may be e.g. a nickel hydride secondary battery or a nickel cadmium secondary battery, in place of the lithium ion secondary battery.

The charging circuit 300 includes a voltage detector 33, a current detector 34, a power source section 37, a controlling section 38, a constant current circuit 39, and a constant voltage circuit 41.

The power source section 37 is a power source circuit provided with e.g. an AC-DC converter for converting an alternate current voltage supplied from the commercial power source via the power source line 7 into a direct current voltage. The positive output terminal of the power source section 37 is connected, via the constant voltage circuit 31, the current detector 34, the electrode 32, and the electrode 17, to the positive terminal of the secondary battery unit 13. The negative output terminal of the power source section 37 is connected, via the constant current circuit 39, the electrode 31, and the electrode 15, to the negative terminal of the secondary battery unit 13. The electrode 31 is connected to the ground.

The constant current circuit 39 regulates a charging current of the secondary battery unit 13 to be supplied from the power source section 37 to the battery pack 10 in accordance with a control signal from the controlling section 38. The constant voltage circuit 41 regulates a charging voltage of the secondary battery unit 13 to be supplied from the power source section 37 to the battery pack 10 in accordance with a control signal from the controlling section 38.

The voltage detector 33 is a circuit for detecting a voltage at the electrodes 31 and 32, i.e. a terminal voltage Vb of the secondary battery unit 13. The voltage detector 33 includes e.g. a resistor, and outputs, to the controlling section 38, a voltage obtained by voltage drop by the resistor, as a voltage detection signal Sv. Alternatively, the voltage detector 33 may detect, for instance, a terminal voltage at the both ends of each of the secondary batteries 12 in the battery pack 10, and output a voltage detection signal Sv representing the respective terminal voltages to the controlling section 38.

The current detector 34 is a circuit for detecting a charging current Ic to be supplied from the constant voltage circuit 41 to the secondary battery unit 13 via the electrodes 32 and 17. The current detector 34 outputs, to the controlling section 38, a current detection signal Si obtained by converting the charging current Ic into a voltage by a current sensor incorporated with a hall element, or the resistor, for instance.

The controlling section 38 includes a CPU (Central Processing Unit) for executing e.g. a predetermined computation process, an ROM (Read Only Memory) as a nonvolatile storage device recorded with a predetermined control program, an RAM (Random Access Memory) as a volatile storage device for temporarily recording data, and an AD converter for converting the voltage detection signal Sv and the current detection signal Si into a digital value. The controlling section 38 outputs a control signal to the constant current circuit 39 and to the constant voltage circuit 41 by executing the control program stored in the ROM for control of a charging operation of the secondary battery unit 13.

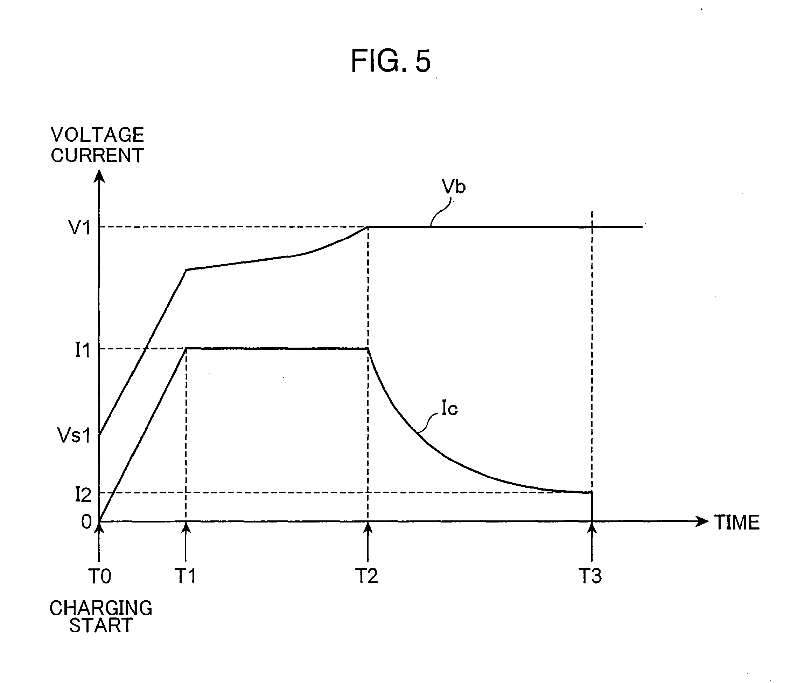

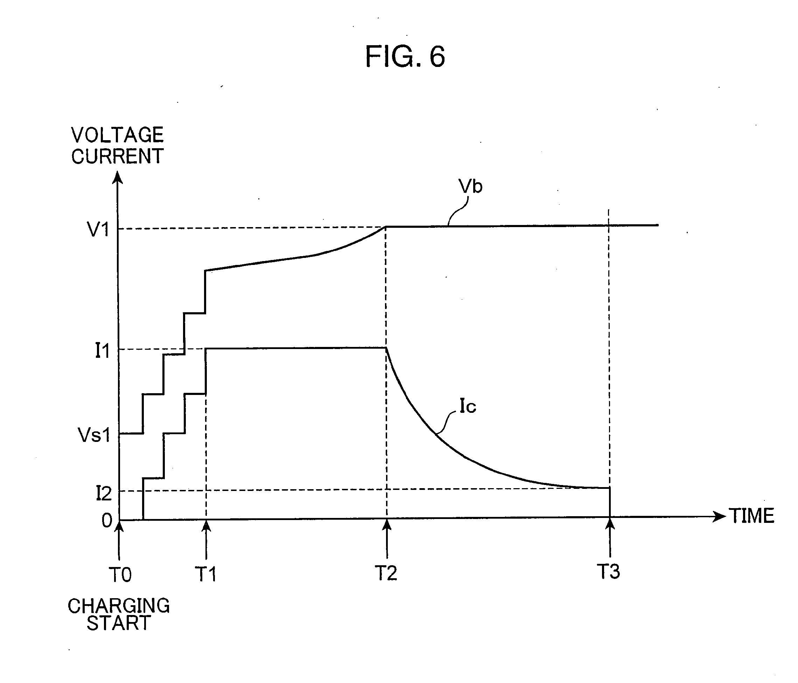

In the following, description is made concerning a charging operation in the case where the battery pack 10 and the charging device 3 having the above arrangements are coupled to each other. FIG. 5 is a diagram for describing an example of the charging operation in the case where the battery pack 10 and the charging device 3 are coupled to each other. In FIG. 5, the axis of abscissa represents a time, and the axis of ordinate represents a current and a voltage. The same definition is applied to the axes of abscissa and the axes of ordinate in FIGS. 6, 7, 8, and 10.

Referring to FIG. 5, first, at the timing T0, when the controlling section 38 detects e.g. connection of the power source line 7 to the commercial power source AC, or manipulation of an unillustrated operation switch of the charging device 3, or detects user's attachment of the battery pack 10 onto the charging device 3, the controlling section 38 starts a charging control operation. In other words, charging of the secondary battery unit 13 is started.

After the charging start at the timing T0, the constant current circuit 39 is operative in accordance with a control signal from the controlling section 38 to gradually, specifically, sequentially i.e. smoothly increase the charging current Ic to be supplied from the power source section 37 to the secondary battery unit 13 at a predetermined increase rate e.g. a constant increase rate of 1A/sec. When the charging current Ic is increased, the voltage at the electrodes 31 and 32 i.e. the terminal voltage Vb, which is a voltage for charging the secondary battery unit 13, is gradually increased from an initial voltage Vs1, which is an output voltage of the secondary battery unit 13 at the charging start timing T0.

The current detector 34 detects the charging current Ic, and outputs the current detection signal Si representing the charging current Ic to the controlling section 38. Then, the controlling section 38 compares the charging current Ic represented by the current detection signal Si with a predetermined current value I1 as a first threshold current. If the charging current Ic has reached the current value I1 at the timing T1, the constant current circuit 39 is operative in accordance with a control signal from the controlling section 38 to set the charging current Ic of the secondary battery unit 13 to be supplied from the power source section 37 to the battery pack 10 to the predetermined constant current value I1, as a current for constant current charging. Thereby, the terminal voltage Vb at the electrodes 31 and 32 is moderately increased, as the secondary battery unit 13 is charged. This embodiment describes an example that both the first threshold current and the current for constant current charging are set equal to the current value I1. Alternatively, the first threshold current and the current for constant current charging may be set to different current values.

The voltage detector 33 detects the terminal voltage Vb, and the voltage detection signal Sv representing the terminal voltage Vb is outputted to the controlling section 38. Then, the controlling section 38 compares the terminal voltage Vb represented by the voltage detection signal Sv with a predetermined voltage V1 as a threshold voltage. Then, at the timing T2, when the terminal voltage Vb has reached the voltage VI, the constant current circuit 39 is operative in accordance with a control signal from the controlling section 38 to suspend the constant current output control, and then, the constant voltage circuit 41 is operative to set the terminal voltage Vb of the secondary battery unit 13 to be supplied from the power source section 37 to the battery pack 10 to the constant voltage V1 for constant voltage charging. Thereby, the charging current Ic is moderately decreased, as the secondary battery unit 13 is charged. This embodiment describes an example in which both the threshold voltage and the voltage for constant voltage charging are set equal to the voltage V1. Alternatively, the threshold voltage and the voltage for constant voltage charging may be set to different voltages.

The detection of the charging current Ic by the current detector 34, the detection of the terminal voltage Vb by the voltage detector 33, the comparison of the charging current Ic with the current value I1 by the controlling section 38, and the comparison of the terminal voltage Vb with the voltage V1 by the controlling section 38 are executed concurrently with controls of the constant current circuit 39 and the constant voltage circuit 41 after the charging start.

Then, at the timing T3, in the case where the controlling section 38 judges that the charging current Ic detected by the current detector 34 is smaller than a predetermined charging completion current I2 as a second threshold current, in other words, in the case where the terminal voltage Vb detected by the voltage detector 33 is equal to or larger than the voltage V1, and the charging current Ic detected by the current detector 34 is smaller than the predetermined charging completion current I2, the controlling section 38 judges that the secondary battery unit 13 is in a full charge condition. Then, the constant voltage circuit 41 is operative in accordance with a control signal from the controlling section 38 to set the output voltage of the power source section 37 substantially zero. Thereby, the charging current Ic is set substantially zero, and the charging of the secondary battery unit 13 is terminated.

Alternatively, after the charging start at the timing T0, as shown in FIG. 6, for instance, the constant current circuit 39 may be operative in accordance with a control signal from the controlling section 38 to gradually, specifically, stepwisely increase the charging current Ic to be supplied from the power source section 37 to the secondary battery unit 13 by e.g. 1A each time one second has elapsed. Stepwisely increasing the charging current Ic may fail to make the timing of increasing the charging current Ic coincident with the timing when the charging current Ic has reached the current value I1. As a result, the charging current Ic may exceed the current value I1. Sequentially increasing the charging current Ic enables to constantly set the charging current Ic to the current value I1 by detecting the timing at which the charging current Ic is substantially coincident with the current value I1, although a slight detection error may be included by control delay due to an operation response time required by the current detector 34 and the controlling section 38. Accordingly, the control of sequentially increasing the charging current Ic enables to detect that the charging current Ic has reached the current value I1 with high precision, as compared with the control of stepwisely increasing the charging current Ic.

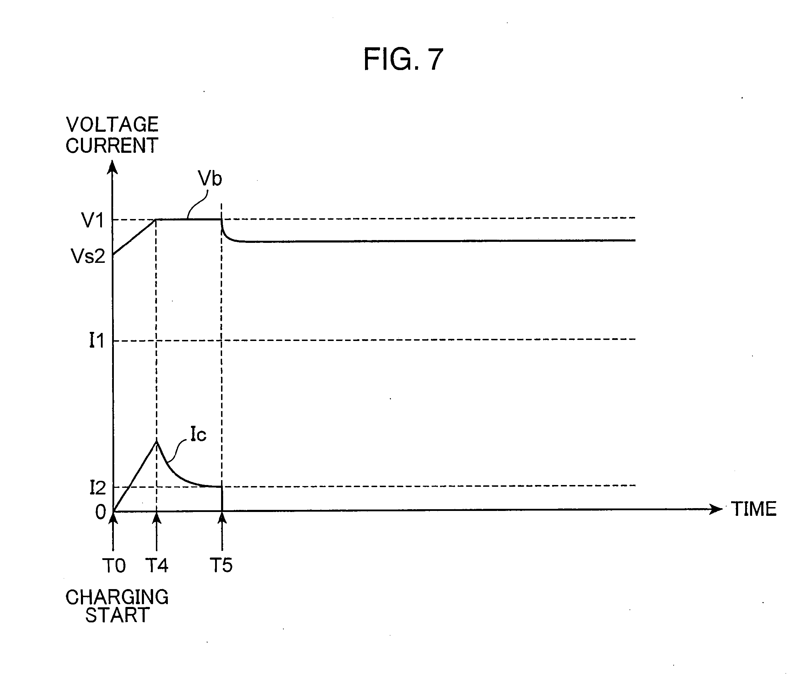

In the following, description is made concerning an operation of the charging device 3 in the case where the secondary battery unit 13 is in a near-full-charge condition. FIG. 7 is a diagram for describing an example of the operation of the charging device 3 in the case where an initial voltage Vs2, as an output voltage of the secondary battery unit 13 at the charging start timing T0 is higher than the initial voltage Vs1 in FIG. 5 because the secondary battery unit 13 is in a near-full-charge condition, and the residual capacity of the secondary battery unit 13 is larger than that of the secondary battery unit 13 in FIG. 5.

Referring to FIG. 7, first, at the timing T0, the initial voltage Vs2 of the secondary battery unit 13 is higher than the initial voltage Vs1 in FIG. 5. When the controlling section 38 detects connection of the power source line 7 to the commercial power source AC, or manipulation of the unillustrated operation switch of the charging device 3, or a like operation, the controlling section 38 starts a charging control operation. In other words, charging of the secondary battery unit 13 is started.

Then, after the charging start at the timing T0, the constant current circuit 39 is operative in accordance with a control signal from the controlling section 38 to gradually, specifically, sequentially i.e. smoothly increase the charging current Ic to be supplied from the power source section 37 to the secondary battery unit 13 at a predetermined increase rate e.g. a constant increase rate of 1A/sec. As the charging current Ic is increased, the voltage at the electrodes 31 and 32 i.e. the terminal voltage Vb, which is a voltage for charging the secondary battery unit 13, is gradually increased from the initial voltage Vs2.

The detection of the charging current Ic by the current detector 34, the detection of the terminal voltage Vb by the voltage detector 33, the comparison of the charging current Ic with the current value I1 by the controlling section 38, and the comparison of the terminal voltage Vb with the voltage V1 by the controlling section 38 are executed concurrently with controls of the constant current circuit 39 and the constant voltage circuit 41 after the charging start. Then, at the timing T4, the terminal voltage Vb reaches the voltage V1 before the charging current Ic reaches the current value I1.

With the above arrangement, before the constant current circuit 39 starts a constant current charging operation with the current value 11, the controlling section 38 confirms that the terminal voltage Vb has reached the voltage V1 based on the voltage detection signal Sv outputted from the voltage detector 33. Then, the constant voltage circuit 41 is operative in accordance with a control signal from the controlling section 38 to set the terminal voltage Vb to be supplied from the power source section 37 to the battery pack 10 for charging the secondary battery unit 13 to the constant voltage V1. This enables to moderately decrease the charging current Ic, as the secondary battery unit 13 is charged.

Then, at the timing T5, when the controlling section 38 judges that the charging current Ic detected by the current detector 34 is smaller than the predetermined charging completion current I2, the constant voltage circuit 41 is operative in accordance with a control signal from the controlling section 38 to set the output voltage of the power source section 37 substantially zero, and the charging current Ic is set substantially zero. Thus, the charging of the secondary battery unit 13 is terminated.

With the above arrangement, in the case where the terminal voltage Vb for charging the secondary battery unit 13 has reached the voltage V1, as a threshold voltage for transition to the constant voltage charging, before the charging current Ic, which is gradually increased because of a large residual capacity of the secondary battery unit 13, reaches the current value I1, as a transient current to the constant current charging, the charging current Ic can be decreased by conducting the constant voltage charging without increasing the charging current Ic up to the current value I1. Thus, the secondary battery unit 13 can be brought to a full charge condition. This arrangement enables to suppress overcharging which may occur in start of charging the secondary battery unit in a near-full-charge condition.

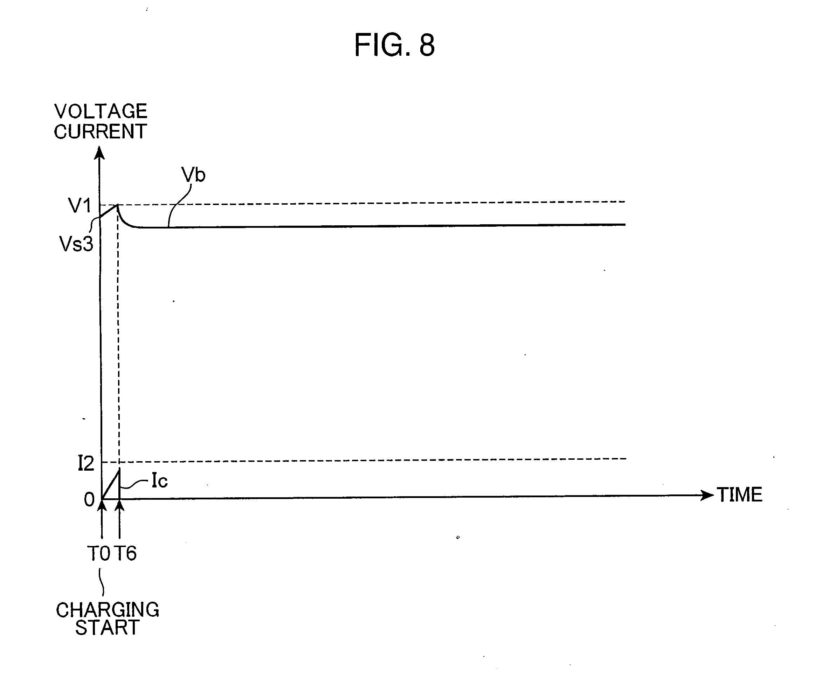

In the following, description is made concerning an operation of the charging device 3 in the case where the secondary battery unit 13 is in a full charge condition. FIG. 8 is a diagram for describing an example of the operation of the charging device 3 in the case where an initial voltage Vs3, as an output voltage of the secondary battery unit 13 at the charging start timing T0, is higher than the initial voltage Vs2 in FIG. 7 because the secondary battery unit 13 is in a full charge condition.

Referring to FIG. 8, first, at the timing T0, the initial voltage Vs3 of the secondary battery unit 13 is higher than the initial voltage Vs2 in FIG. 7. Then, when the controlling section 38 detects connection of the power source line 7 to the commercial power source AC, or manipulation of the unillustrated operation switch of the charging device 3, or a like operation, the controlling section 38 starts a charging control operation. In other words, charging of the secondary battery 13 is started.

Then, after the charging start at the timing T0, the constant current circuit 39 is operative in accordance with a control signal from the controlling section 38 to gradually, specifically, sequentially i.e. smoothly increase the charging current Ic to be supplied from the power source section 37 to the secondary battery unit 13 at a predetermined increase rate e.g. a constant increase rate of 1A/sec. When the charging current Ic is increased, the voltage at the electrodes 31 and 32 i.e. the terminal voltage Vb, which is a voltage for charging the secondary battery unit 13, is gradually increased from the initial voltage Vs3.

The detection of the charging current Ic by the current detector 34, the detection of the terminal voltage Vb by the voltage detector 33, the comparison of the charging current Ic with the current value I1 by the controlling section 38, and the comparison of the terminal voltage Vb with the voltage V1 by the controlling section 38 are executed concurrently with controls of the constant current circuit 39 and the constant voltage circuit 41 after the charging start. Then, at the timing T6, the terminal voltage Vb reaches the voltage V1 before the charging current Ic reaches the charging completion current 12.

With the above arrangement, the controlling section 38 judges that the secondary battery unit 13 is in a full charge condition, if the terminal voltage Vb detected by the voltage detector 33 is equal to or larger than the voltage VI, and if the charging current Ic detected by the current detector 34 is smaller than the predetermined charging completion current 12. Then, the constant voltage circuit 41 is operative in accordance with a control signal from the controlling section 38 to set the output voltage of the power source section 37 substantially zero. Thereby, the charging current Ic is set substantially zero, and the charging of the secondary battery unit 13 is terminated.

With the above arrangement, in the case where the terminal voltage Vb for charging the secondary battery unit 13 has reached the voltage VI, as the threshold voltage for transition to the constant voltage charging, before the charging current Ic is gradually increased and reaches the charging completion current I2 because the secondary battery unit 13 is in a full charge condition, the controlling section 38 controls the power source section 37 to suspend the voltage supply to the secondary battery unit 13. In other words, supply of the charging current to the secondary battery unit 13 is made substantially zero. This enables to suppress overcharging which may occur in start of charging the secondary battery unit in a full charge condition.

### (Second Embodiment)

This section describes a charging device incorporated with a charging circuit according to the second embodiment of the invention, and a rechargeable electric tool kit equipped with the charging device. The charging device incorporated with the charging circuit according to the second embodiment, and the electric tool kit equipped with the charging device are different from those in the first embodiment in that the charging device 3 in the second embodiment is provided with the charging circuit 300a, in place of the charging circuit 300.

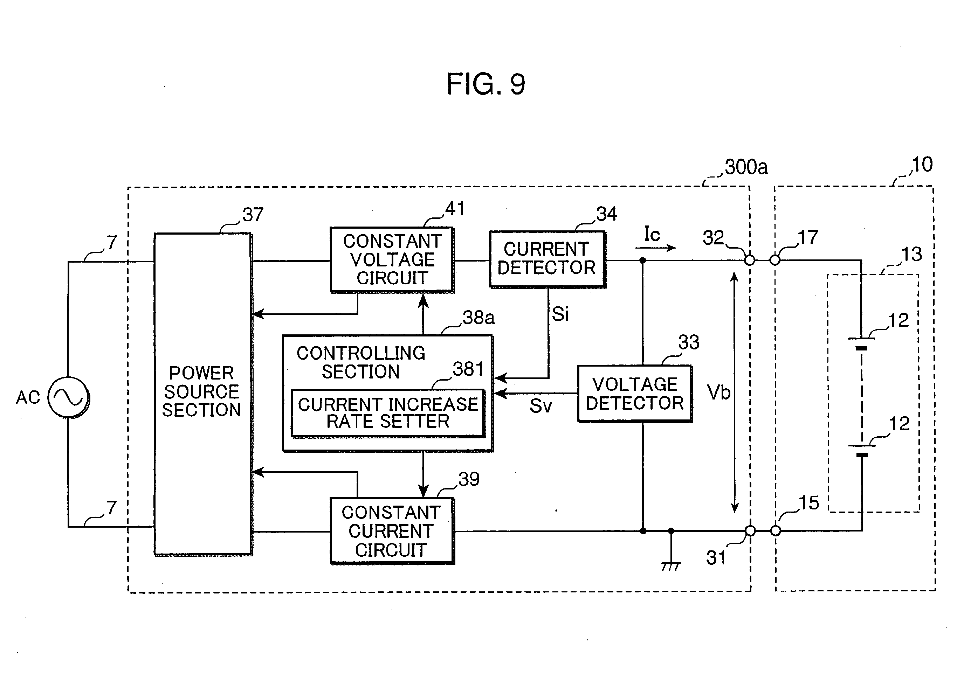

FIG. 9 is a block diagram showing an example of an arrangement of the charging circuit 300a. The charging circuit 300a shown in FIG. 9 is different from the charging circuit 300 in the first embodiment in that a controlling section 38a executes e.g. a predetermined control program stored in an ROM so that the charging circuit 300a is additionally functioned as a current increase rate setter 381. The construction and the operation of the charging circuit 300a other than the above are identical to those of the charging circuit 300 shown in FIG. 4, and accordingly, description thereof will be omitted herein.

In this embodiment, a voltage detector 33 also functions as an initial voltage detector for detecting a terminal voltage Vb of a secondary battery unit 13 before a power source section 37 starts supplying a charging current Ic to the secondary battery unit 13.

The current increase rate setter 381 sets an increase rate "b" to be used by the constant current circuit 39 in gradually increasing the supply amount of the charging current Ic from the power source section 37 in accordance with an increase/decrease of the terminal voltage Vb detected by the voltage detector 33 serving as the initial voltage detector.

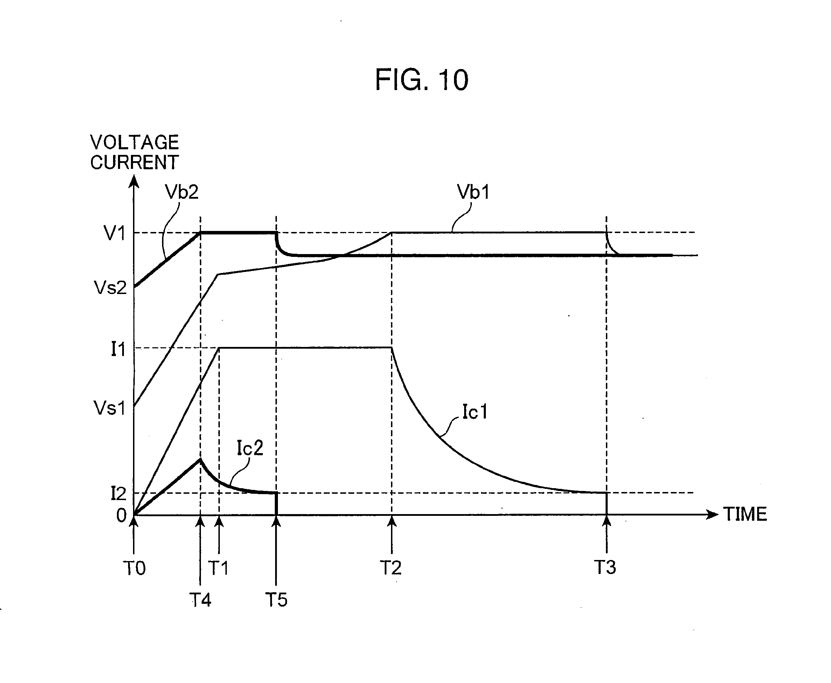

In the following, description is made concerning an operation of the charging device in this embodiment. FIG. 10 is a diagram for describing an example of a charging operation in the case where the charging device 3 provided with the charging circuit 300a and a battery pack 10 are coupled to each other. Referring to FIG. 10, the thin lines represent a terminal voltage Vb1 and a charging current Ic1 in the case where the residual capacity of the secondary battery unit 13 is small, and the output voltage of the secondary battery unit 13 at the charging start timing T0 is set to an initial voltage Vs1, and the bold lines represent a terminal voltage Vb2 and a charging current Ic2 in the case where the secondary battery unit 13 is in a near-full-charge condition, and the output voltage of the secondary battery unit 13 at the charging start timing T0 is set to an initial voltage Vs2 higher than the initial voltage Vs1.

Referring to FIG. 10, first, in the case where the output voltage of the secondary battery unit 13 is set to the initial voltage Vs1 at the charging start timing T0, when the controlling section 38a detects, at the timing T0, connection of a power source line 7 to a commercial power source AC, or manipulation of an unillustrated operation switch of the charging device 3, or a like operation, the voltage detector 33 is operative to detect an initial voltage Vs, which is the output voltage i.e. the terminal voltage Vb of the secondary battery unit 13 at the charging start timing T0, and then, a voltage detection signal Sv representing the initial voltage Vs is outputted to the controlling section 38. In this arrangement, the voltage detector 33 corresponds to an example of the initial voltage detector.

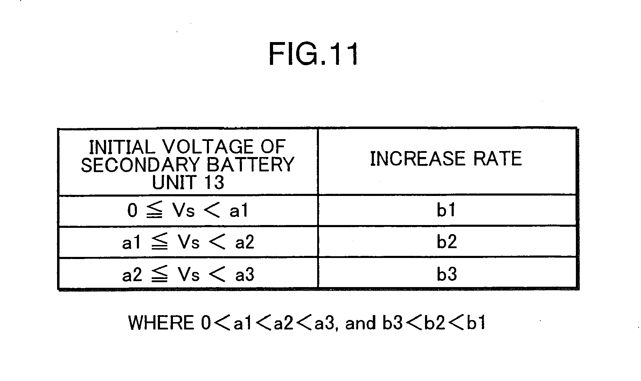

Then, the current increase rate setter 381 sets an increase rate "b" to be used by the constant current circuit 39 in gradually increasing the supply amount of the charging current Ic from the power source section 37, in other words, changes an increase amount of the current per unit time in accordance with an increase/decrease of the initial voltage Vs represented by the voltage detection signal Sv. More specifically, a nonvolatile storage device such as an ROM pre-stores an LUT (lookup table), as shown in FIG. 11, in which the increase rates "b" are correlated to the respective corresponding initial voltages Vs, as the output voltages of the secondary battery unit 13 at the charging start timing T0; and the current increase rate setter 381 sets the increase rate "b", referring to the LUT shown in FIG. 11, based on the initial voltage Vs detected by the voltage detector 33.

Referring to FIG. 11, the requirements: 0<a1<a2<a3, and b3<b2<b1 are satisfied; and the current increase rate setter 381 sets the increase rate "b" to b1 if the initial voltage Vs is not smaller than 0V and is smaller than a1; sets the increase rate "b" to b2 if the initial voltage Vs is not smaller than a1 and is smaller than a2; and sets the increase rate "b" to b3 if the initial voltage Vs is not smaller than a2 and is smaller than a3. In this way, the increase rate "b" is increased in gradually increasing the supply amount of the charging current Ic in accordance with a decrease of the initial voltage Vs, and the increase rate "b" is decreased in gradually increasing the supply amount of the charging current Ic in accordance with an increase of the initial voltage Vs.

For instance, referring to FIG. 10, if the initial voltage Vs1 is not smaller than 0V and is smaller than a1, the current increase rate setter 381 sets the increase rate "b" to b1, and if the initial voltage Vs2 is not smaller than a2 and is smaller than a3, the current increase rate setter 381 sets the increase rate "b" to b3. Thus, the current increase rate setter 381 sets the increase rate "b" for the initial voltage Vs2 smaller than the increase rate "b" for the initial voltage Vs1 so that the charging current Ic is moderately increased.

FIG. 11 shows an example that the increase rate "b" is set in three stages of b1, b2, and b3. Alternatively, the increase rate "b" may be set in e.g. two stages or more than three stages. Further alternatively, the increase rate "b" may be calculated with respect to the initial voltage Vs, using a function or a like mathematical expression.

After the setting of the increase rate "b" by the current increase rate setter 381, the controlling section 38a starts a charging control operation. In other words, charging of the secondary battery unit 13 is started. After the charging start at the timing T0, the constant current circuit 39 is operative in accordance with a control signal from the controlling section 38a to sequentially or stepwisely increase the charging current Ic to be supplied from the power source section 37 to the secondary battery unit 13, specifically, sharply increase the charging current Ic with an increase rate of e.g. b1 in the case where the output voltage of the secondary battery unit 13 at the charging start timing T0 is the initial voltage Vs1; and to sequentially or stepwisely increase the charging current Ic, specifically, moderately increase the charging current Ic with an increase rate of e.g. b3 in the case where the output voltage of the secondary battery unit 13 at the charging start timing T0 is the initial voltage Vs2.

With the above arrangement, in the case where the output voltage of the secondary battery unit 13 at the charging start timing T0 is the initial voltage Vs2 indicated by the bold line in FIG. 10, in other words, in the case where the secondary battery unit 13 is in a near-full-charge condition or a full charge condition, an increase rate of the charging current Ic is set small immediately after the charging start, and then the charging current Ic is moderately increased. This arrangement enables to reduce the charging current immediately after the charging start, and to suppress overcharging which may occur in start of charging the secondary battery unit in a near-full-charge condition or a full charge condition.

The operations after the charging start timing T0 are substantially identical to those at the timings T1 to T3 in FIG. 5, and T4 to T5 in FIG. 7, and accordingly, description thereof will be omitted herein.

The specification discloses the aforementioned embodiments. The following is a brief summary of the embodiments of the invention.

A charging circuit for charging a secondary battery, according to the first aspect of the invention, comprises: a power source section for supplying an electric current for charging the secondary battery to the secondary battery; a controlling section for controlling an operation of the power source section; a current detector for detecting the charging current to be supplied from the power source section to the secondary battery; and a voltage detector for detecting a terminal voltage of the secondary battery, wherein the controlling section controls the power source section to gradually increase a supply amount of the current in start of the charging of the secondary battery, to set the supply amount of the current to a predetermined constant current for a constant current charging if the charging current detected by the current detector has reached a predetermined first threshold current, and to supply a predetermined voltage for a constant voltage charging to the secondary battery if the terminal voltage detected by the voltage detector has reached a predetermined threshold voltage.

In the thus constructed charging circuit, when the controlling section starts charging the secondary battery, the supply amount of the current by the power source section is gradually increased. If the charging current has reached the predetermined first threshold current, the power source section is operative to set the supply amount of the current to the predetermined constant current for a constant current charging to perform the constant current charging. Also, if the terminal voltage of the secondary battery has reached the predetermined threshold voltage, the power source section is operative to supply the predetermined voltage for a constant voltage charging to the secondary battery to perform the constant voltage charging. Thereby, the charging current immediately after the charging start is decreased, which enables to suppress overcharging which may occur in start of charging the secondary battery in a full charge condition or a near-full-charge condition.

A charging circuit according to the second aspect of the invention is the charging circuit according to the first aspect of the invention, wherein the controlling section controls the power source section to suspend the voltage supply to the secondary battery if the terminal voltage detected by the voltage detector is equal to or larger than the threshold voltage, and if the charging current detected by the current detector is smaller than a predetermined second threshold current.

In the thus constructed charging circuit, full charging of the secondary battery is properly judged, and charging of the secondary battery is terminated accordingly.

A charging circuit according to the third aspect of the invention is the charging circuit according to the first or the second aspect of the invention, wherein the controlling section controls the power source section to set the supply amount of the current to a predetermined constant current for the constant current charging when the power source section gradually increases the supply amount of the current if the terminal voltage detected by the voltage detector is equal to or larger than the threshold voltage, and if the charging current detected by the current detector is over a second threshold current and under the first threshold current.

In the thus constructed charging circuit, when the power source section gradually increases the supply amount of the current, the power source section is operative to set the supply amount of the current to the predetermined constant current for the constant current charging at a proper timing. This arrangement enables to reduce the charging current immediately after the charging start, and to suppress overcharging which may occur in start of charging the secondary battery in a full charge condition or a near-full-charge condition.

A charging circuit according to the fourth aspect of the invention is the charging circuit according to any one of the first through the third aspects of the invention, which further comprises an initial voltage detector for detecting the terminal voltage of the secondary battery before the power source section starts supplying the current to the secondary battery, wherein the controlling section further includes a current increase rate setter for increasing an increase rate to be used by the power source section in gradually increasing the supply amount of the current in accordance with a decrease of the terminal voltage detected by the initial voltage detector, and for decreasing an increase rate to be used by the power source section in gradually increasing the supply amount of the current in accordance with an increase of the terminal voltage detected by the initial voltage detector.

In the thus constructed charging circuit, before the power source section starts supplying the current to the secondary battery, the initial voltage detector detects the terminal voltage of the secondary battery, and the current increase rate setter of the controlling section increases and decreases the increase rate to be used by the power source section in gradually increasing the supply amount of the current in accordance with the decrease and the increase of the terminal voltage detected by the initial voltage detector, respectively. With this arrangement, in the case where the terminal voltage of the secondary battery is set to a relatively high level, as in the case that the secondary battery is in a near-full-charge condition or a full charge condition, the charging current of the secondary battery is moderately increased. This enables to reduce the charging current immediately after the charging start, and to suppress overcharging which may occur in start of charging the secondary battery in a full charge condition or a near-full-charge condition.

A charging circuit according to the fifth aspect of the invention is the charging circuit according to any one of the first through the fourth aspects of the invention, wherein the controlling section controls the power source section to sequentially and gradually increase the supply amount of the current in start of the charging of the secondary battery.

In the thus constructed charging circuit, it can be precisely detected that the charging current has reached the predetermined first threshold current. This is more advantageous in suppressing overcharging which may occur in start of charging the secondary battery in a full charge condition or a near-full-charge condition.

A charging circuit according to the sixth aspect of the invention is the charging circuit according to any one of the first through the fourth aspects of the invention, wherein the controlling section controls the power source section to stepwisely and gradually increase the supply amount of the current in start of the charging of the secondary battery.

In the thus constructed charging circuit, there is provided a charging circuit capable of stepwisely and gradually increasing the supply amount of the current by the power source section in start of charging the secondary battery.

A charging circuit according to the seventh aspect of the invention is a charging device comprising: a connector terminal to be connected to a secondary battery; a charging circuit for charging the secondary battery via the connector terminal; and a casing for housing the charging circuit therein, wherein the charging circuit is the charging circuit recited in any one of the first through the sixth aspects of the invention.

In the thus constructed charging circuit, there is provided a charging device capable of suppressing overcharging which may occur in start of charging the secondary battery in a full charge condition or a near-full-charge condition.

A charging method according to the eighth aspect of the invention is a charging method for charging a secondary battery, comprising: gradually increasing a supply amount of an electric current for charging the secondary battery in start of the charging of the secondary battery; setting the supply amount of the charging current to a predetermined constant current for a constant current charging if the charging current to be supplied to the secondary battery has reached a predetermined first threshold current; and supplying a predetermined voltage for a constant voltage charging to the secondary battery if a terminal voltage of the secondary battery has reached a predetermined threshold voltage.

In the thus constructed charging method, in start of charging the secondary battery, the supply amount of the current is gradually increased. When the charging current has reached the predetermined first threshold current, the supply amount of the current is set to the predetermined constant current for a constant current charging to perform the constant current charging. Also, when the terminal voltage of the secondary battery has reached the predetermined threshold voltage, the predetermined voltage for a constant voltage charging is supplied to the secondary battery to perform the constant voltage charging. This arrangement enables to reduce the charging current immediately after the charging start, and to suppress overcharging which may occur in start of charging the secondary battery in a full charge condition or a near-full-charge condition.

This application is based on Japanese Patent Application No. 2005-333105 filed on November 17, 2005, the contents of which are hereby incorporated by reference.

Although the invention has been appropriately and fully described by way of examples with reference to the accompanying drawings, it is to be understood that various changes and/or modifications will be apparent to those skilled in the art. Therefore, unless otherwise such changes and/or modifications depart from the scope of the present invention hereinafter defined, they should be construed as being included therein.

## Claims

1. A charging circuit for charging a secondary battery, comprising:
a power source section for supplying an electric current for charging the secondary battery to the secondary battery;
a controlling section for controlling an operation of the power source section;
a current detector for detecting the charging current to be supplied from the power source section to the secondary battery; and
a voltage detector for detecting a terminal voltage of the secondary battery, wherein
the controlling section controls the power source section
to gradually increase a supply amount of the current in start of the charging of the secondary battery,
to set the supply amount of the current to a predetermined constant current for a constant current charging if the charging current detected by the current detector has reached a predetermined first threshold current, and
to supply a predetermined voltage for a constant voltage charging to the secondary battery if the terminal voltage detected by the voltage detector has reached a predetermined threshold voltage.

2. The charging circuit according to claim 1, wherein
the controlling section controls the power source section to suspend the voltage supply to the secondary battery if the terminal voltage detected by the voltage detector is equal to or larger than the threshold voltage, and if the charging current detected by the current detector is smaller than a predetermined second threshold current.

3. The charging circuit according to claim 1, wherein
the controlling section controls the power source section to set the supply amount of the current to a predetermined constant current for the constant current charging when the power source section gradually increases the supply amount of the current if the terminal voltage detected by the voltage detector is equal to or larger than the threshold voltage, and if the charging current detected by the current detector is over a second threshold current and under the first threshold current.

4. The charging circuit according to claim 1, further comprising an initial voltage detector for detecting the terminal voltage of the secondary battery before the power source section starts supplying the current to the secondary battery, wherein
the controlling section further includes a current increase rate setter for increasing an increase rate to be used by the power source section in gradually increasing the supply amount of the current in accordance with a decrease of the terminal voltage detected by the initial voltage detector, and for decreasing an increase rate to be used by the power source section in gradually increasing the supply amount of the current in accordance with an increase of the terminal voltage detected by the initial voltage detector.

5. The charging circuit according to claim 1, wherein
the controlling section controls the power source section to sequentially and gradually increase the supply amount of the current in start of the charging of the secondary battery.

6. The charging circuit according to claim 1, wherein
the controlling section controls the power source section to stepwisely and gradually increase the supply amount of the current in start of the charging of the secondary battery.

7. A charging device comprising:
a connector terminal to be connected to a secondary battery;
a charging circuit for charging the secondary battery via the connector terminal; and
a casing for housing the charging circuit therein, wherein
the charging circuit is the charging circuit recited in any one of claims 1 through 6.

8. A method for charging a secondary battery, comprising:
gradually increasing a supply amount of an electric current for charging the secondary battery in start of the charging of the secondary battery;
setting the supply amount of the charging current to a predetermined constant current for a constant current charging if the charging current to be supplied to the secondary battery has reached a predetermined first threshold current; and
supplying a predetermined voltage for a constant voltage charging to the secondary battery if a terminal voltage of the secondary battery has reached a predetermined threshold voltage.
